# EUROPEAN PATENT SPECIFICATION

(11) **EP 1 008 776 B1**
(45) Date of publication and mention of the grant of the patent: **25.10.2006**
(21) Application number: 98310375.5
(22) Date of filing: 09.12.1998
(51) Int. Cl.: F16D 1/10, F04D 29/26

(54) **Transverse fan motor drive coupling**
Antriebsmotorkupplung für einen Querstromlüfter
Accouplement d'entraînement à moteur pour ventilateur à courant transversal

(43) Date of publication of application: 14.06.2000
(73) Proprietor: CARRIER CORPORATION, Syracuse, New York 13221 (US)
(72) Inventor: Francesco, Antonione, 20146 Milano (IT); Crippa, Giacomo, 20059 Vimercata (MI) (IT)
(74) Representative: Leckey, David Herbert

(56) References cited:
- WO-A-97/16650
- WO-A-97/37147
- DE-A- 4 327 461
- DE-B- 1 286 348
- US-A- 3 256 031
- US-A- 3 897 162
- US-A- 4 411 634

## Description

### Background of the Invention

This invention relates generally to transverse fans and more particularly to drive unit assemblies for such fans.

The typical transverse fan is a long wheel fan having a substantial length to diameter ratio in the neighborhood of four to eight. Such long length fans are used in a variety of air flow applications including HVAC devices where they often extend along the entire length of a heat exchanger within the HVAC device. These fans are preferably rotatably mounted at one end within a fixed bearing assembly while being rotatably driven at the other end by an appropriately sized electric motor.

The electric motor typically has a drive shaft which must be fixedly connected to the drive end of the transverse fan. This has heretofore been accomplished by introducing a special coupling device between the drive shaft and the drive end of the transverse fan. This coupling device usually contains a sleeve that receives the drive shaft. The sleeve must be accurately positioned on the drive shaft so that the entire transverse fan assembly will sit correctly in the fixed bearing assembly. The thus positioned sleeve must also be secured to the drive shaft in a very limited space between the drive end of the transverse fan and the electric motor. The above has often been accomplished by providing a threaded screw in the sleeve which must be engaged and rotated into contact with the drive shaft so as to secure the sleeve to the drive shaft.

A rotary force transmission device is disclosed in WO-A-97/37147.

### Summary of the Invention

It is an object of the invention to reduce the complexity of positioning and securing a transverse fan to the drive shaft of the electric motor that rotatably drives the fan.

According to the invention, there is provided apparatus as claimed in claim 1.

The apparatus allows the coupling device (drive hub) to be quickly and accurately positioned and secured to the drive shaft. This is accomplished by a particularly shaped drive shaft having a diameter slightly greater than the interior diameter of a major portion of the sleeve of the coupling device that is to receive the shaped drive shaft. The drive shaft also preferably has a beveled end so as to facilitate introduction of the shaped drive shaft into the interior of the sleeve. The drive shaft furthermore preferably includes a notched portion of reduced diameter positioned at a predefined distance from the electric motor. The sleeve has an interior portion of reduced diameter that ultimately sits in the notched portion of the shaped drive shaft following insertion of the drive shaft into the sleeve. The notched portion of the drive shaft preferably includes notch walls of a predefined slope. The sleeve preferably includes a step down region to the reduced diameter that complements the predefined slope of the notch walls.

The coupling device is preferably configured so as to also easily attach to the drive end of the transverse fan. This is accomplished by preferably providing locking structure within the coupling device that engages a cavity within the drive end of the transverse fan. The locking structure includes compressible locking elements which first engage a first set of cavity recesses and thereafter rotate into locking engagement with a second set of cavity recesses.

The coupling device is preferably molded from a thermoplastic elastomer material that can undergo the necessary deformations required when the drive shaft is introduced into the sleeve as well as deformations required of the compressible locking elements.

### Brief Description of the Drawings

Other objects and advantages of the invention will be apparent from the following description in conjunction with the accompanying drawings, in which:
Figure 1 illustrates a transverse fan with drive coupling to an electric motor;
Figure 2 is an exploded view of the drive coupling and drive end of the transverse fan of Figure 1;
Figures 3, 4 and 5 are partial views of the end of the transverse fan illustrating how the drive coupling is rotated into a locked position within the end of the transverse fan;
Figure 6 illustrates the drive coupling in locked position with respect to the transverse fan;
Figure 7 is a front view of the drive coupling in locked position with respect to the transverse fan;
Figure 8 is a rear view of the drive coupling in locked position with respect to the transverse fan;
Figure 9 is a cross sectional view of the drive coupling in lock position with respect to the transverse fan;
Figure 10 is another cross-sectional view of the drive coupling in lock position;
Figure I 1 illustrates an electric motor for a transverse fan and a particularly shaped drive shaft to be inserted into the drive coupling of Figure 10; and
Figure 12 illustrates the drive coupling of Figure 10 mounted on the particular shaped drive shaft of Figure 11.

### Description of the Preferred Embodiment

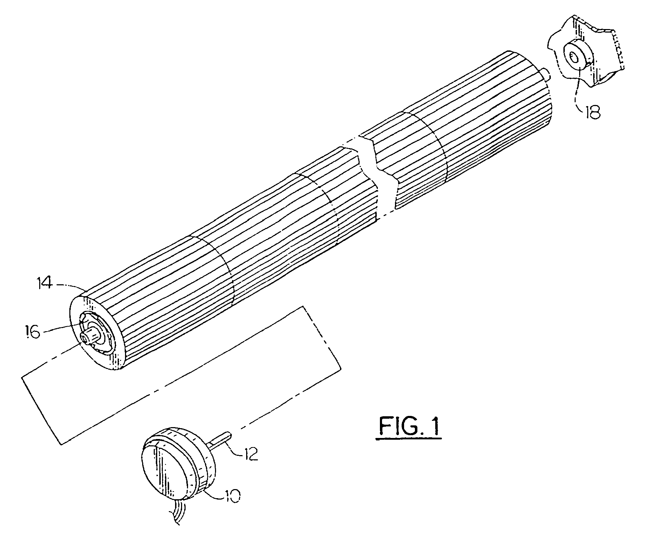

Referring to Figure 1, an electric drive motor 10 having a drive shaft 12 is illustrated relative to a transverse fan assembly 14 having a drive coupling or drive hub16 associated therewith. It is io be appreciated that the drive hub is mounted on the shaft 12 of the electric motor 10 so as to thereby allow the transverse fan assembly 14 to rotate about the axis of the drive shaft 12. The transverse fan assembly also rotates about an axis defined by a bearing assembly 18 at the opposing end of the transverse fan assembly.

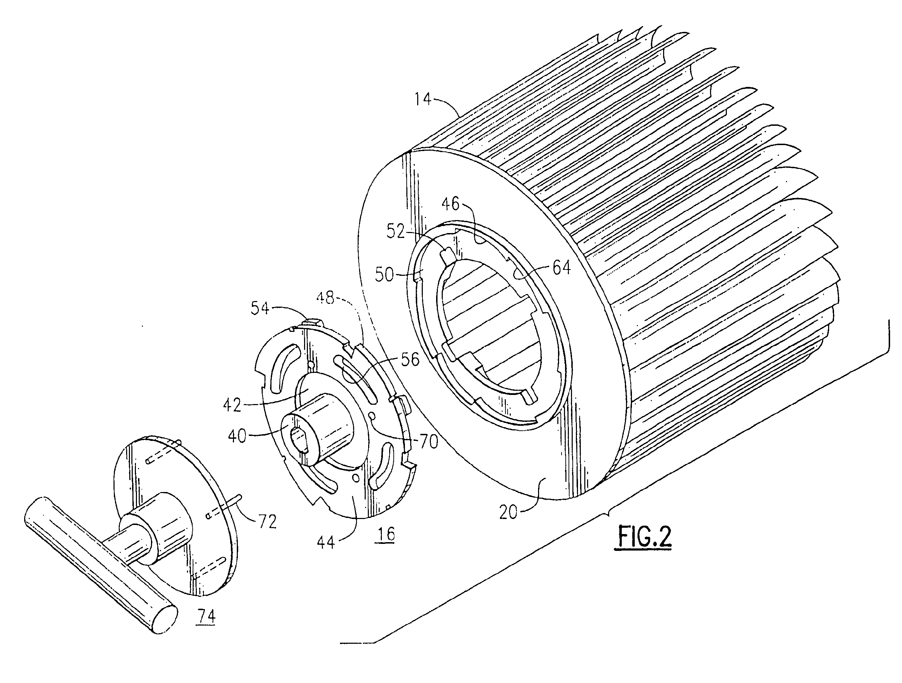

Referring to Figure 2, the drive hub 16 is illustrated relative to a drive end plate 20 of the transverse fan assembly 14. The drive end plate 20 is preferably part of the entire transverse fan assembly 14 and is molded from a rigid material such as styrene acrylonitrile with glass filler. The resultingly molded drive end plate is quite rigid relative to the drive hub 16.

The drive hub 16 is seen to comprise a sleeve 40, a diaphragm 42 and a locking structure 44. The sleeve 40 attaches the drive hub to the shaft 12. The locking structure 44 attaches the drive hub to the drive end plate 20. The sleeve 40, diaphragm 42 and locking structure 44 are preferably all part of a single molded drive hub. Such drive hub is preferably molded from a thermoplastic elastomer material that is fatigue resistant, heat resistant, creep resistant, ozone resistant, and ultraviolet resistant. A thermoplastic elastomer material having such properties is HYTREL® 5526, available from the DuPont company. A drive hub fabricated from this material is both flexible and resilient to repeated deformation so as not to fatigue over the life of the transverse fan which is typically in the range of ten to fifteen years.

The drive hub 16 preferably inserts into an opening or cavity 22 within the drive end plate 20. The opening or cavity is defined by a peripheral contour that includes contoured recesses such as 46 that initially receive locking elements such as 48 projecting from the locking structure 44. The locking elements are preferably curved lobes on the locking structure 44. The opening or cavity in the drive end plate 20 is furthermore defined by a back section 50 having cutouts such as 52. The cutouts receive locking tabs such as 54 on the locking structure. The locking tabs 54 rotate into position behind the back side of the section 50 once the drive hub is inserted and rotated within the opening in the drive end plate.

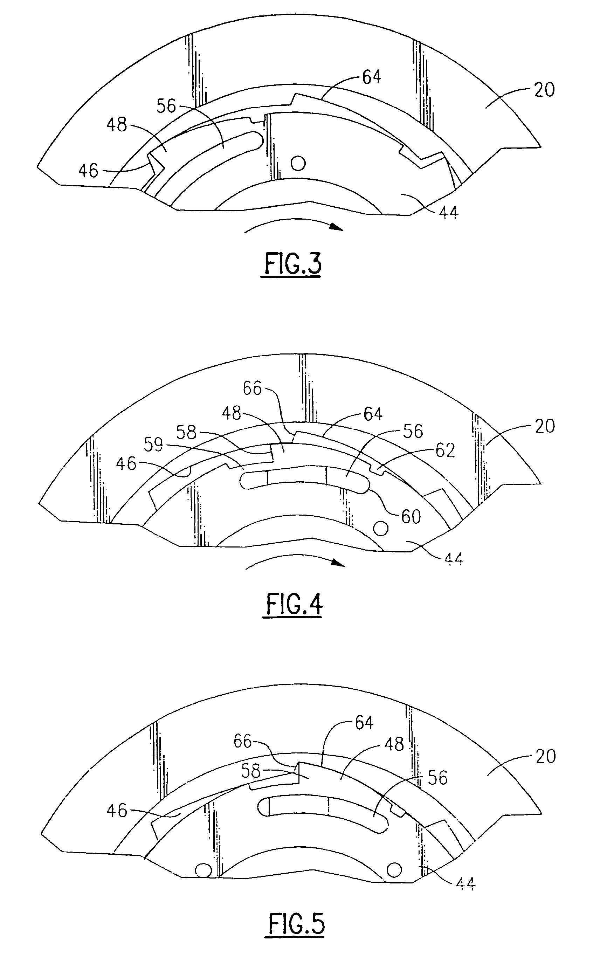

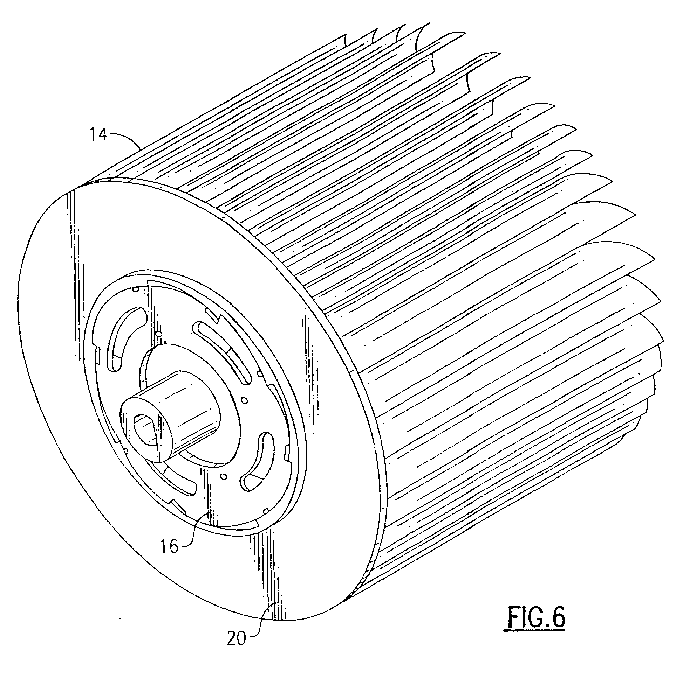

Referring to Figure 3, the locking element 48 of the drive hub is seen to engage the recess 46 within the drive end plate 20. The curvature of the recess 46 is preferably such as to only allow a portion of the locking element to contact the recess. This is preferably accomplished by requiring that the recess 46 have a slightly greater radius of curvature than that of the locking element 48. Following initial engagement of the locking element 48 with the recess 46, the drive hub is rotated clockwise as indicated by the arrow in Figure 3. The highest portion of the locking element 48 travels along the downward sloping curvature of the recess 46 as illustrated in Figure 4. As shown in Figure 4, a slotted hole 56 in the locking structure 44 deforms downwardly toward the center of the hub assembly. This deformation is caused by the locking element 48 moving downwardly toward the center of the hub as it moves along the curvature of the recess 46. The slotted hole 56 preferably begins substantially upstream of the leading edge 58 of the locking element 48 so as to thereby define a thin flexible link 59 between the upwardly extending portion of the locking element beginning with the edge 58 and the main body of the locking structure 44. As can be appreciated, the thin flexible link 59 elongates somewhat when the locking element moves downwardly. An opposing end 60 of the slotted hole 56 is preferably located beneath a notch 62 in the locking structure 44. The location of the end 60 beneath the notch 62 defines the pivot point of the locking element 48 as it pivots downwardly when moving along the downwardly sloping curvature of the recess 46. The locking element 48 continues to pivot downwardly as the drive hub rotates clockwise until it reaches the end of the recess 46. As shown in Figure 5, the locking element 48 ultimately snaps into a locking recess 64 within the drive end plate 20 when it reaches the end of the recess 46. An inclined edge 66 of the locking recess 64 preferably begins at an angle with respect to the end of the recess 46. This inclined recess edge allows the highest point of the leading edge 58 of the locking element to slide into the top most part of the locking recess 64. At this point, the slot 56 returns to substantially its original shape thereby releasing most of the compression of the locking structure 44 caused by the engagement of the locking element 48 the recess 46.

Referring to Figure 2, it is noted that the drive hub includes holes such as 70 that receive pin extensions such as 72 from a tool 74. The drive hub is preferably mounted on the tool 74 before insertion into the opening or cavity of the drive end plate. The locking tabs 54 are received in the matching cutouts such as 52 in the drive plate 20. The tool 74 provides sufficient leverage to easily rotate the locking elements of the drive hub into place within the drive end plate.

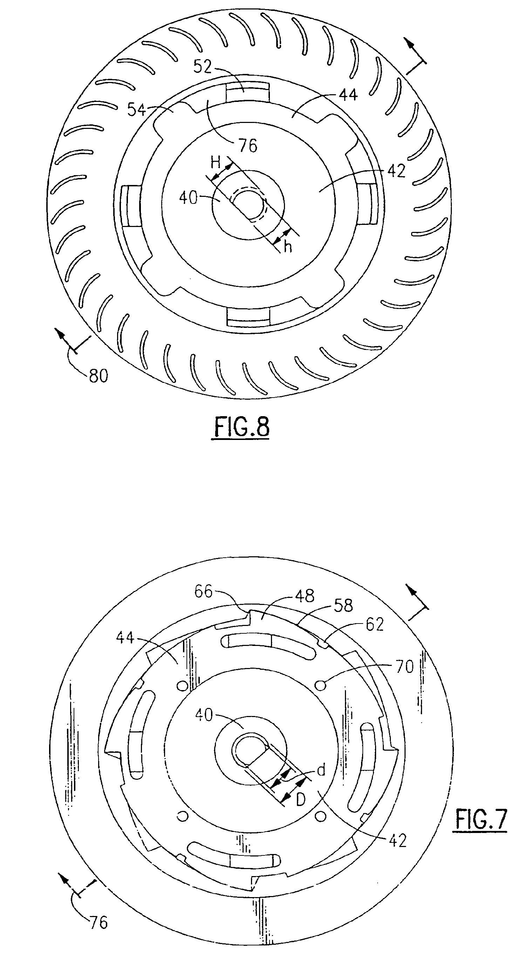

Referring to Figure 6, the drive hub 16 is illustrated in place within the drive end plate 20. The locking elements of the drive hub illustrated as being in place with respective locking recesses of the drive end plate. The final position of each locking element with respect to a corresponding locking recess is further illustrated in Figure 7, which is a front-end view of the drive hub within the drive end face. There are preferably four such locking elements and corresponding locking recesses. Each locking clement includes a notch 62 defining a respective pivot point.

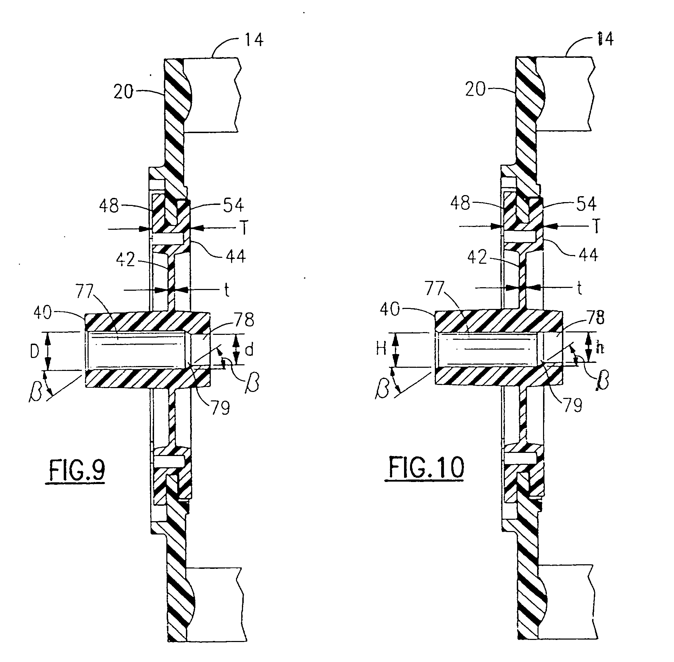

Referring to Figure 8, the back side of the drive hub 16 within the drive end plate 20 is illustrated. It is to be noted that the locking tabs such as 54 have been rotated from their respective entry points in the cutouts such as 52 along formed channels such as 76 in the back side of the drive end plate until reaching the end of such channels. The ends of these channels determine not just the final position of the locking tabs, but also the final position of the locking elements within their respective locking recesses. In this regard, the ends of these channels must be carefully defined relative to the inclined edges 66 of the locking recesses so that the edges 58 of the locking elements move into final position within the corresponding locking recesses.

Referring to Figure 9, a cross-sectional view of the drive hub within the drive end plate is shown along the line 76 of Figure 7. The thickness "t" of the diaphragm 42 is illustrated relative to the thickness "T" of the locking structure 44. The depth of the holes such as 70 within the locking structure are also shown. In a particular preferred embodiment, the thickness "T" of the locking structure is six millimeters with a tolerance of one-tenth of a millimeter. This allows sufficient rigidity to support the diaphragm 42 while still accommodating the amount of compression of the slot 56 that must occur during the locking action. The thickness "t" of the diaphragm must be thin enough so as to allow for any potential mild distortion of the diaphragm that may be needed. As has been previously discussed, such distortion may occur due to axial misalignment of the drive shaft of the motor at one end of the transverse fan assembly with respect to the bearing mount at the opposing end. The thickness "t" however must also be thick enough so as to oppose any sagging creep due to the weight of the transverse fan assembly. These two requirements of the thickness "t" are met in a particular preferred embodiment by a thickness "t" of one millimeter having a tolerance of five hundredths of a millimeter.

The interior of the sleeve 40 is also shown in Figure 9 The interior of the sleeve 40 is preferably D-shaped as shown in Figures 7 and 8. The D-shaped interior will have a first portion having an interior diameter of "D" and a second portion having a reduced interior diameter of "d" as shown in Figure 7. As shown in to Figure 9, the first portion having the interior diameter of "D" is labeled 77 whereas the second portion having the reduced interior diameter of "d" is labeled as 78. It is to be noted that the interior of the sleeve 40 also has a step down or transition region 79 wherein the interior diameter changes from "D" to "d". The slope of the wall in this region is denoted by the angle β. The beginning of the first interior portion 77 of the sleeve is also preferably beveled at the angle β.

Referring to Figure 8, the second portion 79 of the D-shaped interior of the sleeve 40 is seen to have a height "h" as measured from the flat portion of the D-shaped interior. The first portion 77 having the greater height of "H" as measured from the flat portion of the D-shaped interior is shown in phantom outline. The difference between the heights "H" and "h" should be one-half of the difference between the interior diameters "D" and "d".

Referring to Figure 10, a cross sectional view of the drive hub within the drive end plate is shown along the line 80 of Figure 8. The interior of the sleeve 40 in this cross sectional view illustrates the height "h" as measured from the flat portion of the D-shaped interior. The first portion 77 having the greater height "H" is also shown.

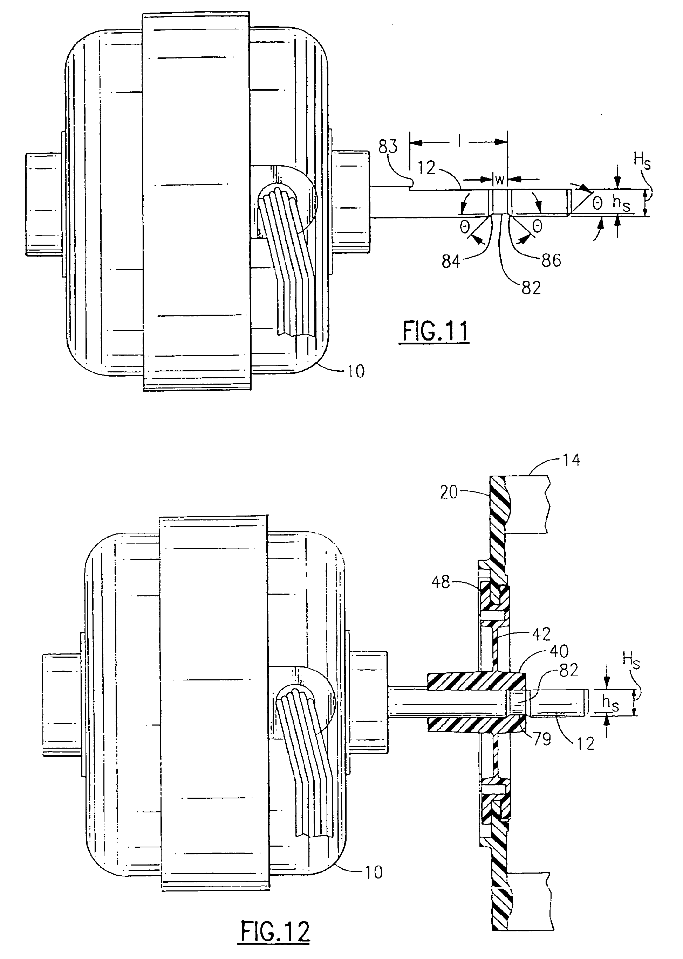

Referring to Figure 11, a drive shaft 12 for the shaped interior of the sleeve 40 is illustrated. The profile of the drive shaft in Figure 11 emphasizes the height dimension "Hₛ" and "hₛ" of the shaft instead of the diameter dimensions of the shaft. The drive shaft 12 extends from the electric motor 10 that will ultimately drive the transverse fan assembly through the drive hub 40. The end of the D-shaped drive shaft 12 is preferably beveled at an angle θ. The angle θ is preferably equal to the angle of slope, β, of the step down region 79 of the sleeve from the diameter "D" to the diameter "d" as shown in Figure 9 or from the height "H" to the height "h" in Figure 10. The D-shaped drive shaft furthermore includes a notch 82 located at a distance "1" from a step down 83 in the drive shaft. The notch 82 includes sloped notch walls 84 and 86. The angle of slope of these walls is preferably also the angle θ as measured from horizontal. As noted previously, the angle θ is preferably also equal to the angle of slope β in the step down region 79 of the sleeve 40. The depth of the notch 82 preferably defines a notch shaft height of "hₛ" only slightly greater than the height "h" of the reduced diameter portion 78 of the sleeve 40. The depth of the notch 82 also defines the difference between the height "Hₛ" of the larger diameter portions of the drive shaft and the notch shaft height, "hₛ". It is to be understood that diameter dimensions of the shaft would be slightly greater than the corresponding diameter dimensions "D" and "d" of the sleeve.

Referring to Figure 12, the D-shaped drive shaft 12 is shown inserted within the sleeve 40. The inserted drive shaft 12 and the sleeve 40 are shown in a profile that again emphasizes the height instead of diameter dimensions of the shaft and sleeve. The width "w" of the notch 82 fits firmly within the smaller diameter "d" portion 78 of the sleeve 40. The remainder of the shaft 82 within the sleeve 40 has a diameter slightly greater than the larger diameter "D" of the larger "D" diameter portion 77 of the sleeve 40. This slight oversizing of the diameter of the drive shaft 12 will cause the thermoplastic elastomer material of the sleeve to slightly compress thereby establishing a firm and secure fit of the sleeve over the drive shaft.

It is to be appreciated that a particular embodiment of the drive hub 16 and motor drive shaft 12 have been described. Alterations, modifications and improvements thereto will readily occur to those skilled in the art. Accordingly, the foregoing description is by way of example only and the invention is to be limited by the following claims and equivalents thereto.

## Claims

1. Apparatus connecting a transverse fan (14) to an electric motor (10), said apparatus comprising:
a drive hub (16) connected to a drive end (20) of the transverse fan (14), said drive hub (16) having:
a radially inner sleeve (40) for engaging the drive shaft (12) of the electric motor (10), said sleeve (16) comprising a first interior sleeve portion (78) having a first interior diameter (d) and a second interior sleeve portion (77) having a second interior diameter (D) greater than said first interior diameter,
a radially outer portion (44) for transmitting rotation of said hub (16) to said fan (14); and
a diaphragm (42) located between said sleeve (40) and said outer portion (44), said diaphragm (42) having a thickness less than the thickness of the outer portion (44) thereby allowing said diaphragm to flex between the sleeve and the outer portion (44);
said drive shaft (12) connected to said electric motor (10), said drive shaft having a first drive shaft portion and a second drive shaft portion, each portion having a first drive shaft diameter slightly greater than the second interior diameter (D) of said sleeve (40), said drive shaft (12) furthermore having a notched drive shaft portion (82) of reduced drive shaft diameter slightly greater than the first interior diameter (d) of said sleeve (40), said drive shaft (12) having been inserted into said sleeve(40) so that the first interior sleeve portion engages the notched drive shaft portion (82) of reduced drive shaft diameter and said first drive shaft portion extends out beyond the end of said sleeve (40) and said second drive shaft portion engages the second interior sleeve portion (77).

2. The apparatus of claim 1 wherein the first and , second drive shaft portions and the notched drive shaft portion (82) are D-saped and wherein the first and second interior sleeve portions (78, 77) of said sleeve are D-shaped so as to receive the D-shaped drive shaft portions of the drive shaft.

3. The apparatus of claim 2 wherein said notched drive shaft portion (82) has sloped notch walls (84, 86) and wherein said sleeve (40) includes a step down interior diameter portion (79) between said second interior sleeve portion (77) and said first interior sleeve portion (78) wherein said step down interior portion (79) has an inclined slope equal to the slope of the sloped notch walls (84, 86) of said notched drive shaft portion (82) of said drive shaft (12).

4. The apparatus of any preceding claim wherein said outer portion (44) is a locking structure (44) having a diameter substantially larger than the diameter of the sleeve (40) and furthermore having a plurality of locking members (48) located around the periphery of the locking structure for engaging a cavity (22) within an end (20) of the transverse fan (14).

5. The apparatus of claim 4 wherein the cavity (22) of the drive end (20) of the transverse fan (14) comprises:
a plurality of first recesses (46) in the contour of the cavity (22) for receiving the locking members (48) of the locking structure (44).

6. The apparatus of claim 5 wherein the cavity (22) within the drive end (20) further comprises:
a plurality of second recesses (64) in the contour of the cavity (22) for receiving said plurality of locking members (48) when said drive hub (16) is rotated within said cavity so as to move said locking members (48) from said plurality of first recesses (46) to said plurality of second recesses (64).

7. The apparatus of claim 6 wherein each locking member (48) is flexibly connected to a part of the locking structure (44) so as to flex downwardly toward the sleeve (40) of the drive hub (16) when said drive hub (16) is rotated within said cavity (22) of the drive end (20) so as to move the locking members (48) from said plurality of first recesses (46) into said plurality of second recesses (48).

8. The apparatus of claim 7 wherein the locking structure of the drive hub further comprises:
a plurality of slotted holes (56) located below respective locking members (48), each slotted hole (56) defining a space for the downward deflection of the respective locking member (48) to move into as the drive hub (16) is rotated with the cavity (22) of the drive end (20).

9. The apparatus of claim 8 wherein the locking structure of the drive hub further comprises:
a plurality of notches (62) in the periphery of the locking structure (44), each notch (62) associated with a particular locking member (48) and positioned above an end of a slotted hole (56) associated with the particular locking member (48) so as to define a pivoting point for the particular locking member (48) as the particular locking member (48) is forced to move downwardly into the slotted hole (56) associated with the locking member (48).

10. The apparatus of claim 9 wherein the locking structure of the drive hub further comprises:
a plurality of links (59), each link (59) associated with a respective locking member (48), each link (59) positioned above a slotted hole (56) of the locking structure (44) so as to connect the locking member (48) to the locking structure (44) at the end of the slotted hole (56) opposite the end of the slotted hole (56) beneath a respective notch (62) in the contour of the locking structure.

11. The apparatus of any preceding claim wherein the drive hub (16) is molded as a unit from a thermoplastic elastomer material.

12. The apparatus of claim wherein the thermoplastic material is fatigue resistant, heat resistant, creep resistant, oil resistant and ultraviolet resistant.

## Patentansprüche

1. Vorrichtung,die ein Transversalgebläse (14) mit einem Elektromotor (10) verbindet, wobei die Vorrichtung aufweist:
eine Antriebsnabe (16), die mit einem Antriebsende (20) des Transversalgebläses (14) verbunden ist, wobei die Antriebsnabe (16) aufweist:
eine radial innere Hülse (40) zum Zusammenwirken mit der Antriebswelle (12) des Elektromotors (10), wobei die Hülse (16) einen ersten inneren Hülsenbereich (78) mit einem ersten Innendurchmesser (d) und einen zweiten inneren Hülsenbereich (77) mit einem zweiten Innendurchmesser "D" größer als der erste Innendurchmesser aufweist,
einen radial äußeren Bereich (44) zum Übertragen von Rotation von der Nabe (16) auf das Gebläse (14); und
eine Membran (42), die zwischen der Hülse (40) und dem äußeren Bereich (44) positioniert ist, wobei die Membran (42) eine Dicke hat, die geringer als die Dicke des Außenbereichs (44) ist, wodurch der Membran ermöglicht wird, sich zwischen der Hülse und dem äußeren Bereich (44) zu biegen;
wobei die Antriebswelle (12) mit dem Elektromotor (10) verbunden ist, wobei die Antriebswelle einen ersten Antriebswellenbereich und einen zweiten Antriebswellenbereich hat, wobei jeder Bereich einen ersten Antriebswellendurchmesser geringfügig größer als der zweite Innendurchmesser (D) der Hülse (40) hat, wobei die Antriebswelle (12) ferner einen gekerbten Antriebswellenbereich (42) mit reduziertem Antriebswellendurchmesser geringfügig größer als der erste Innendurchmesser (d) der Hülse (40) hat, wobei die Antriebswelle (12) in die Hülse (40) so eingebracht wurde, dass der erste innere Hülsenbereich mit dem gekerbten Antriebswellenbereich (82) mit reduziertem Antriebswellendurchmesser zusammenwirkt und der erste Antriebswellenbereich über das Ende der Hülse (40) hinausragt und der zweite Antriebswellenbereich mit dem zweiten inneren Hülsenbereich (77) zusammenwirkt.

2. Vorrichtung nach Anspruch 1, wobei der erste und der zweite Antriebswellenbereich und der gekerbte Antriebswellenbereich (82) D-förmig sind und wobei der erste und der zweite innere Hülsenbereich (78, 77) der Hülse D-förmig sind, um die D-förmigen Antriebswellenbereiche der Antriebswelle aufzunehmen.

3. Vorrichtung nach Anspruch 2, wobei der gekerbte Antriebswellenbereich (82) geneigte Kerbenwände (84, 86) hat, und wobei die Hülse (40) einen Abstufungsinnendurchmesserbereich (79) zwischen dem zweiten inneren Hülsenbereich (77) und dem ersten inneren Hülsenbereich (78) aufweist, wobei der Abstufungsinnenbereich (79) eine schräge Neigung gleich der Neigung der geneigten Kerbenwände (84, 86) des gekerbten Antriebswellenbereichs (82) der Antriebswelle (12) hat.

4. Vorrichtung nach einem der vorangehenden Ansprüche, wobei der äußere Bereich (44) eine Verriegelungsstruktur (44) ist, die einen Durchmesser wesentlich größer als der Durchmesser der Hülse (40) aufweist und ferner eine Mehrzahl von Verriegelungselementen (48) aufweist, die um den Umfang der Verriegelungsstruktur positioniert sind zum Zusammenwirken mit einem Hohlraum (22) in einem Ende (20) des Transversalgebläses (14).

5. Vorrichtung nach Anspruch 4, wobei der Hohlraum (22) des Antriebsendes (20) des Transversalgebläses (14) aufweist:
eine Mehrzahl von ersten Ausnehmungen (46) in der Kontur des Hohlraums (22) zum Aufnehmen der Verriegelungselemente (48) der Verriegelungsstruktur (44).

6. Vorrichtung nach Anspruch 5, wobei der Hohlraum (22) in dem Antriebsende (20) ferner aufweist:
eine Mehrzahl von zweiten Ausnehmungen (64) in der Kontur des Hohlraums (22) zum Aufnehmen der Mehrzahl von Verriegelungselementen (48), wenn die Antriebsnabe (16) in dem Hohlraum gedreht wird, um so die Verriegelungselemente (58) von der Mehrzahl von ersten Ausnehmungen (46) zu der Mehrzahl von zweiten Ausnehmungen (64) zu bewegen.

7. Vorrichtung nach Anspruch 6, wobei jedes Verriegelungselement (48) flexibel mit einem Teil der Verriegelungsstruktur (44) verbunden ist, um sich abwärts hin zu der Hülse (40) der Antriebsnabe (16) zu biegen, wenn die Antriebsnabe (16) in dem Hohlraum (22) des Antriebsendes (20) gedreht wird, um so die Verriegelungselemente (48) von der Mehrzahl von ersten Ausnehmungen (46) in die Mehrzahl von zweiten Ausnehmungen (48) zu bewegen.

8. Vorrichtung nach Anspruch 7, wobei die Verriegelungsstruktur der Antriebsnabe ferner aufweist:
eine Mehrzahl von Schlitzlöchern (56), die unter den jeweiligen Veriegelungselementen (48) angeordnet sind, wobei jedes Schlitzloch (56) einen Raum für die Abwärtsauslenkung des jeweiligen Verriegelungselements (48) definiert, um sich hineinzubewegen, wenn die Antriebsnabe (16) in dem Hohlraum (22) des Antriebsendes (20) gedreht wird.

9. Vorrichtung nach Anspruch 8, wobei die Verriegelungsstruktur der Antriebsnabe ferner aufweist:
eine Mehrzahl von Kerben (62) im Umfang der Verriegelungsstruktur (44), wobei jede Kerbe (62) einem speziellen Verriegelungselement (48) zugeordnet ist und
über einem Ende eines Schlitzlochs (56), das dem speziellen Verriegelungselement (48) zugeordnet ist, positioniert ist, um so einen Schwenkpunkt für das spezielle Verriegelungselement (48) zu definieren, wenn das spezielle Verriegelungselement (48) dazu gezwungen wird, sich abwärts in das dem Verriegelungselement (48) zugeordnete Schlitzloch (56) zu bewegen.

10. Vorrichtung nach Anspruch 9, wobei die Verriegelungsstruktur der Antriebsnabe ferner aufweist:
eine Mehrzahl von Verbindungselementen 59, wobei jedes Verbindungselement (59) einem jeweiligen Verriegelungselement (48) zugeordnet ist, wobei jedes Verbindungselement (59) über einem Schlitzloch (56) der Verriegelungsstruktur (44) so positioniert ist, dass das Verriegelungselement (48) mit der Verriegelungsstruktur (44) an dem Ende des Schlitzlochs (56) entgegengesetzt dem Ende des Schlitzlochs (56) unter einer jeweiligen Kerbe (62) in der Kontur des Verriegelungselements verbunden ist.

11. Vorrichtung nach einem der vorangehenden Ansprüche, wobei die Antriebsnabe (16) als eine Einheit aus einem thermoplastischen Elastomermaterial geformt ist.

12. Vorrichtung nach Anspruch, wobei das thermoplastische Material ermüdungsresistent, wärmeresistent, kriechresistent, ölresistent und ultraviolettresistent ist.

## Revendications

1. Appareil de raccordement d'un ventilateur à courant transversal (14) à un moteur électrique (10), ledit appareil comprenant :
un moyeu d'entraînement (16) raccordé à une extrémité d'entraînement (20) du ventilateur à courant transversal (14), ledit moyeu d'entraînement (16) comprenant :
un manchon radialement interne (40) pour mettre en prise l'arbre d'entraînement (12) du moteur électrique (10), ledit manchon (16) comprenant une première partie de manchon interne (78) ayant un premier diamètre interne (d) et une seconde partie de manchon interne (77) ayant un second diamètre interne (D) supérieur audit premier diamètre interne,
une partie radialement externe (44) pour transmettre la rotation dudit moyeu (16) audit ventilateur (14) ; et
un diaphragme (42) situé entre ledit manchon (40) et ladite partie externe (44), ledit diaphragme (42) ayant une épaisseur inférieure à l'épaisseur de la partie externe (44) permettant ainsi audit diaphragme de fléchir entre le manchon et la partie externe (44) ;
ledit arbre d'entraînement (12) raccordé audit moteur électrique (10), ledit arbre d'entraînement ayant une première partie d'arbre d'entraînement et une seconde partie d'arbre d'entraînement, chaque partie ayant un premier diamètre d'arbre d'entraînement légèrement supérieur au second diamètre interne (D) dudit manchon (40), ledit arbre d'entraînement (12) ayant en outre une partie d'arbre d'entraînement crantée (82) d'un diamètre d'arbre d'entraînement réduit, légèrement supérieur au premier diamètre interne (d) dudit manchon (40), ledit arbre d'entraînement (12) ayant été inséré dans ledit manchon (40) de sorte que la première partie de manchon interne met en prise la partie d'arbre d'entraînement crantée (82) de diamètre d'arbre d'entraînement réduit et ladite première partie d'arbre d'entraînement s'étend à l'extérieur au-delà de l'extrémité dudit manchon (40) et ladite seconde partie d'arbre d'entraînement met en prise la seconde partie de manchon interne (77).

2. Appareil selon la revendication 1, dans lequel les première et seconde parties d'arbre d'entraînement et la partie d'arbre d'entraînement crantée (82) sont en forme de D, et dans lequel les première et seconde parties de manchon interne (78, 77) dudit manchon sont en forme de D afin de recevoir les parties d'arbre d'entraînement en forme de D de l'arbre d'entraînement.

3. Appareil selon la revendication 2, dans lequel ladite partie d'arbre d'entraînement crantée (82) a des parois d'encoche inclinées (84, 86) et dans lequel ledit manchon (40) comprend une partie de diamètre interne réduite (79) entre ladite seconde partie de manchon interne (77) et ladite première partie de manchon interne (78), dans lequel ladite partie interne réduite (79) a une pente inclinée égale à la pente des parois d'encoche inclinées (84, 86) de ladite partie d'arbre d'entraînement crantée (82) dudit arbre d'entraînement (12).

4. Appareil selon l'une quelconque des revendications précédentes, dans lequel ladite partie externe (44) est une structure de blocage (44) ayant un diamètre légèrement supérieur au diamètre du manchon (40) et ayant en outre une pluralité d'éléments de blocage (48) située autour de la périphérie de la structure de blocage pour mettre en prise une cavité (22) à l'intérieur d'une extrémité (20) du ventilateur à courant transversal (14).

5. Appareil selon la revendication 4, dans lequel la cavité (22) de l'extrémité d'entraînement (20) du ventilateur à courant transversal (14) comprend :
une pluralité de premiers renfoncements (46) dans le contour de la cavité (22) pour recevoir les éléments de blocage (48) de la structure de blocage (44).

6. Appareil selon la revendication 5, dans lequel la cavité (22) à l'intérieur de l'extrémité d'entraînement (20) comprend en outre :
une pluralité de seconds renfoncements (64) dans le contour de la cavité (22) pour recevoir ladite pluralité d'éléments de blocage (48) lorsque ledit moyeu d'entraînement (16) tourne à l'intérieur de ladite cavité afin de déplacer lesdits éléments de blocage (48) de ladite pluralité des premiers renfoncements (46) vers ladite pluralité de seconds renfoncements (64).

7. Appareil selon la revendication 6, dans lequel chaque élément de blocage (48) est raccordé de manière flexible à une partie de la structure de blocage (44) afin de fléchir vers le bas, vers le manchon (40) du moyeu d'entraînement (16) lorsque ledit moyeu d'entraînement (16) tourne à l'intérieur de ladite cavité (22) de l'extrémité d'entraînement (20) afin de déplacer les éléments de blocage (48) de ladite pluralité de premiers renfoncements (46) dans ladite pluralité de seconds renfoncements (48).

8. Appareil selon la revendication 7, dans lequel la structure de blocage du moyeu d'entraînement comprend en outre :
une pluralité de trous fendus (56) situés au-dessous des éléments de blocage (48) respectifs, chaque trou fendu (56) définissant un espace pour la déflexion descendante de l'élément de blocage (48) respectif pour se déplacer à l'intérieur lorsque le moyeu d'entraînement (16) tourne avec la cavité (22) de l'extrémité d'entraînement (20).

9. Appareil selon la revendication 8, dans lequel la structure de blocage du moyeu d'entraînement comprend en outre :
une pluralité d'encoches (62) dans la périphérie de la structure de blocage (44), chaque encoche (62) étant associée à un élément de blocage (48) particulier et positionnée au-dessus d'une extrémité du trou fendu (56) associé à l'élément de blocage (48) particulier afin de définir un point de pivotement pour l'élément de blocage (48) particulier lorsque l'élément de blocage (48) particulier est obligé de descendre dans le trou fendu (56) associé avec l'élément de blocage (48).

10. Appareil selon la revendication 9, dans lequel la structure de blocage du moyeu d'entraînement comprend en outre :
une pluralité de liaisons (59), chaque liaison (59) étant associée à un élément de blocage (48) respectif, chaque liaison (59) étant positionnée au-dessus d'un trou fendu (56) de la structure de blocage (44) afin de raccorder l'élément de blocage (48) à la structure de blocage (44) au niveau de l'extrémité du trou fendu (56) opposée à l'extrémité du trou fendu (56) au-dessous d'une encoche respective (62) dans le contour de la structure de blocage.

11. Appareil selon l'une quelconque des revendications précédentes, dans lequel le moyeu d'entraînement (16) est moulé comme une unité à partir d'un matériau élastomère thermoplastique.

12. Appareil selon la revendication 11, dans lequel le matériau thermoplastique est résistant à la fatigue, résistant à la chaleur, résistant au fluage, résistant à l'huile et résistant aux ultraviolets.
